# EUROPÄISCHE PATENTANMELDUNG

(11) **EP 1 481 718 A1**
(43) Veröffentlichungstag der Anmeldung: **01.12.2004**
(21) Anmeldenummer: 03026495.6
(22) Anmeldetag: 21.11.2003
(51) Int. Cl.: B01D 53/04, B01D 46/52

(54) **Filteranordnung**

(30) Priorität: 27.05.2003 DE 10324341
(71) Anmelder: Carl Freudenberg KG, 69469 Weinheim (DE)
(72) Erfinder: Schmitt, Daniel, Dr., Malabar NSW 2036 (AU); Häfner, Uwe, 69469 Weinheim (DE); Felber, Uwe, 69518 Abtsteinach (DE); Berger, Heike, 69469 Weinheim (DE)

(57) **Zusammenfassung**

Es wird eine Filteranordnung zum Reinigen eines durchströmenden fluiden Mediums insbesondere der einer Fahrgastzelle eines Kraftfahrzeugs zugeführten Luft, beschrieben, welcher eine Partikel- und eine Adsorptionsfiltereinheit umfasst. Eine Verbesserung der Filtereigenschaften wird erfindungsgemäß dadurch erzielt, dass die Adsorptionsfiltereinheit der Partikelfiltereinheit anströmseitig vorgeschaltet ist.

## Beschreibung

### Technisches Gebiet

Die Erfindung betrifft eine Filteranordnung zum Reinigen eines durchströmenden fluiden Mediums, insbesondere der einer Fahrgastzelle eines Kraftfahrzeugs zugeführten Luft, umfassend eine Partikel- und eine Adsorptionsfiltereinheit.

### Stand der Technik

Der Einsatz von Filteranordnungen zum Reinigen eines Fluidstroms ist aus zahlreichen Anwendungen bekannt, so z.B. aus der Autoinnenraumfiltration und der Heizungs- und Klimaanlagentechnik. Solche Filteranordnungen umfassen in der Regel eine partikelfilternde Einheit, die beispielsweise aus Papier oder Vliesstoff bestehen kann und deren Aufgabe darin besteht, partikuläre Verunreinigungen zu beseitigen, sowie eine gasadsorbierende Filtereinheit zur Reinigung des Fluidstroms von gasförmigen Schad- und/ oder Geruchsstoffen. Ein Partikelfilter aus Vliesstoff wird beispielsweise in der DE 40 02 078 C1 beschrieben. Die gasadsorbierende Filtereinheit enthält üblicherweise Aktivkohle als adsorbierendes Medium. Die Aktivkohle liegt dabei in der Regel in Form von Körnchen vor, die an einem geeigneten Trägermaterial, z.B. aus Vlies oder Schaumstoff, fixiert sein können. Adsorptionsfilter mit Aktivkohle sind u.a. in der DE 200 22 207 U1 sowie in der DE 197 08 694 A 1 beschrieben.

Es ist auch bekannt, beide Filter zu einem sogenannten Kombifilter zusammenzufügen. So wird in der o.g. DE 197 08 694 A1 ausgeführt, dass es möglich ist, auf eine die Adsorbentien enthaltende Vliesbahn eine weitere Vliesbahn, die als hochwertiges Partikelfilter ausgebildet ist, aufzubringen.

Bei bekannten Filteranordnungen mit Partikel- und Adsorptionsfilter werden beide Filter so angeordnet, dass immer der Partikelfilter vor dem Adsorptionsfilter vom dem zu reinigenden Fluid durchströmt wird. Wie auch in der DE 197 08 694 A1 und in der DE 200 22 207 U1 ausgeführt wird, soll hierdurch vermieden werden, dass partikuläre Verunreinigungen bis in den Adsorptionsfilter gelangen und dessen Leistungsfähigkeit durch Belegung der Oberfläche oder Verstopfung des Adsorbens herabzusetzen.

### Darstellung der Erfindung

Aufgabe der Erfindung ist, eine Filteranordnung der eingangs beschriebenen Art so weiter zu entwickeln, dass ihre Filtereigenschaften noch verbessert werden. Diese Aufgabe wird gelöst mit einer Filteranordnung mit allen Merkmalen des Patentanspruchs 1. Vorteilhafte Ausgestaltungen der Erfindung sind in den Unteransprüchen beschrieben.

Gemäß der Erfindung wird bei einer Filteranordnung zum Reinigen eines durchströmenden fluiden Mediums, insbesondere der einer Fahrgastzelle eines Kraftfahrzeugs zugeführten Luft, welche eine Partikel- und eine Adsorptionsfiltereinheit umfasst, die Adsorptionsfiltereinheit der Partikelfiltereinheit anströmseitig vorgeschaltet. Es hat sich gezeigt, dass sich in einfacher Weise allein mit einer Umkehrung der allgemein üblichen Durchströmungsreihenfolge von Partikel- und Adsorptionsfilter eine Verbesserung der Filtereigenschaften erzielen lässt. So konnte im Rahmen der Erfindung nicht nur eine Verbesserung des Staubspeichervermögens, sondern auch noch des Adsorptionsverhaltens einer erfindungsgemäßen Filteranordnung nachgewiesen werden. Dieses Ergebnis ist umso überraschender, als nach dem allgemeinen Kenntnisstand der Fachwelt zu erwarten war, dass diese Art der Anordnung zu einer Beeinträchtigung der Filtereigenschaften der Filteranordnung führt. Wie bereits oben erwähnt, ging man davon aus, dass sich die Partikel in den Poren des Adsorbens festsetzen und diese verstopfen und/oder dessen Oberfläche belegen würden. Aus diesem Grund wird beispielsweise bei Kombifiltern in der Regel eine Einbaurichtung vorgegeben beziehungsweise tragen die Filter eine entsprechende Markierung, die die "richtige" Durchströmungsrichtung kenntlich macht. Offensichtlich ist jedoch dieser Effekt entgegen den Erwartungen bei der üblichen Anwendung als Frischluftfilter, beispielsweise in Kraftfahrzeugen, so gering, dass er sich während der normalen Lebensdauer des Filters nicht bemerkbar macht.

Die vorliegende Erfindung hat den großen Vorteil, dass zu ihrer Realisierung beispielsweise herkömmliche Filter eingesetzt werden können. Es ist lediglich erforderlich, diese so anzuordnen, dass die Adsorptionsfiltereinheit in Strömungsrichtung gesehen der Partikelfiltereinheit vorgeschaltet ist. Vorzugsweise werden hierbei Partikelfiltereinheiten eingesetzt, die einen Partikelfilter aus Vliesstoff umfassen. Solche Partikelfilter sind bekannt und in der Literatur vielfach beschrieben. Sie kommen vorzugsweise in der Kraftfahrzeugtechnik, wie auch bei raumlufttechnischen Anlagen für Gebäude zum Einsatz. Die Partikelfilter können hierbei aus ein- oder mehrlagigen Vliesstoffen bestehen, die vorzugsweise elektrostatisch aufgeladen sind und/oder Mikrofasern enthalten. Die vorliegende Erfindung ist jedoch keinesfalls auf Partikelfilter aus Vliesstoff beschränkt. Je nach Anwendungszweck sind beispielsweise auch Partikelfilter auf der Basis von Papier denkbar.

Unter Adsorptionsfilter sollen im Rahmen der Erfindung solche Filter verstanden werden, die Materialien enthalten, die adsorptiv, physisorptiv oder chemiesorptiv und/oder katalytisch wirken. Diese Materialien, die in der Regel an einem Trägergerüst angeordnet sind, können beispielsweise Aktivkohle, Silicagele, Zeolithe, polymere Ionentauscher, Aerogele, Tonerde oder Mischungen dieser Stoffe umfassen. In einer bevorzugten Ausführungsform der Erfindung finden Aktivkohlefilter mit einem Träger aus Vliesstoff Anwendung. Bei einem solchen Filter sind die Aktivkohlepartikel auf bzw. in dem Träger aus Vliesstoff fixiert. Solche Träger aus Vliesstoff selbst besitzen keine Filtereigenschaften. Sie besitzen schon rein optisch eine sehr offene Struktur. Dies wurde auch durch Messung des NaCl-Durchlassgrades an typischen Vliesstoffträgern für Aktivkohlefilter bestätigt. Diese Messung, die zur Erlangung eines besseren Verständnisses für die vorliegende Erfindung durchgeführt wurden, ergaben für die Vliesstoffträger Werte für den Durchlassgrad von > 90 %. Für Vliesstoffpartikelfilter sind dagegen Werte von < 70% für den Durchlassgrad unerlässlich. Ein weiteres Unterscheidungsmerkmal ist die elektrostatische Aufladung, die bei der Herstellung von Vliesstoffen für Partikelfilter über die Zusammensetzung wie auch die Verfahrensführung gezielt eingestellt wird. Eine solche elektrostatische Aufladung ist bei Trägern aus Vliesstoff für Aktivkohlefilter oder sonstige Adsorptionsfilter nicht erforderlich und daher in der Regel auch nicht vorhanden.

In einer weiteren bevorzugten Ausführungsform der Erfindung sind die Partikelund die Adsorptionsfiltereinheit zu einem an sich bekannten Kombifilter zusammengefasst, vorzugsweise zu einem Kombifilter aus Vliesstoff und einem Aktivkohlefilter. Erfindungsgemäß ist ein solcher Kombifilter so aufgebaut beziehungsweise angeordnet, dass der Adsoprtionsfilter, z.B. der Aktivkohlefilter, welcher beispielsweise einen Vliesstoffträger mit Aktivkohlepartikeln umfassen kann, zuerst durchströmt wird. Mit dem Adsorptions- bzw. Aktivkohlefilter verbunden ist der Partikelfilter, der vorzugsweise ebenfalls aus Vliesstoff besteht und der abströmseitig vom Adsorptions-/Aktivkohlefilter angeordnet ist.

Vorzugsweise wird eine erfindungsgemäße Filteranordnung im Kraftfahrzeugbau für die Autoinnenraumfiltration eingesetzt. Weitere bevorzugte Einsatzgebiete sind z.B. Filteranlagen in raumlufttechnischen Anlagen.

Bei den oben angegebenen bevorzugten Anwendungsgebieten sind die Partikel- und/oder die Adsorptionsfiltereinheit beziehungsweise der Kombifilter vorzugsweise als plattenförmiger Filtereinsatz mit zickzackförmig gefalteter Filterbahn ausgebildet.

Nachfolgend wird die Erfindung anhand der Figuren näher beschrieben.
Es zeigen:
Fig. 1 in einer perspektivischen, schematischen (nicht maßstabsgetreuen) Darstellung einen Kombifilter, mit einer Filteranordnung gemäß der Erfindung;
Fig. 2 die Ergebnisse der Messungen der Staubbeladung einer erfindungsgemäßen und einer herkömmlichen Filteranordnung;
Fig. 3 die Ergebnisse der Messung der n-Butan-Adsorption an einer erfindungsgemäßen und einer herkömmlichen Filteranordnung;
Fig. 4 die Messung des Trenngrades für Umgebungsaerosol an einer erfindungsgemäßen und einer herkömmlichen Filteranordnung;
Fig. 5 die Ergebnisse der Messung des Trenngrades für den Prüfstaub AC fein für eine erfindungsgemäße und eine herkömmliche Filteranordnung;
Fig. 6 die Ergebnisse der Messung des Druckverlustes für eine erfindungsgemäße und eine herkömmliche Filteranordnung.

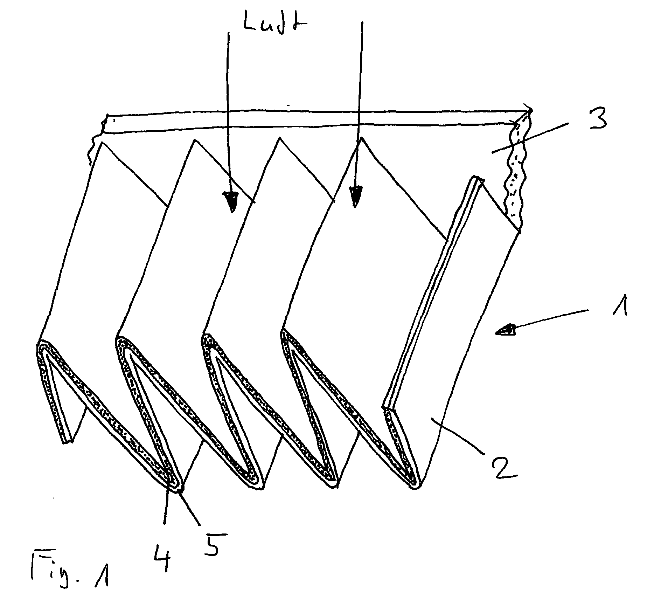

Man erkennt in Fig. 1 eine erfindungsgemäße Filteranordnung, die gemäß einer bevorzugten Ausführungsform der Erfindung als Kombifilter 1 ausgebildet ist. Der Kombifilter 1 umfasst eine gefaltete Filterbahn 2, die von einem Rahmen 3 begrenzt wird. Die Filterbahn 2 umfasst eine Adsorptionsfilterlage 4 sowie eine Partikelfilterlage 5. Beide sind miteinander verbunden. Die Adsorptionsfilterlage 4 besteht gemäß einer bevorzugten Ausführungsform der Erfindung aus einem Vliesstoffträger, der mit Adsorberpartikeln z.B. Aktivkohle, beladen ist. Man erkennt, dass die Adsorptionsfilterlage anströmseitig angeordnet ist, d.h. dass von dem zu filternden Luftstrom zuerst durchströmt wird.

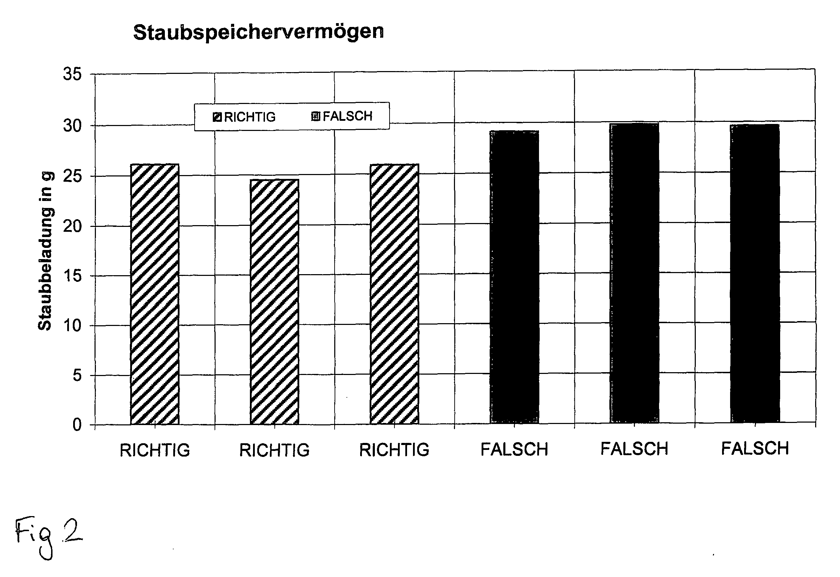

An einem Standardkombifilter für die Autoinnenraumfiltration mit einem Filteraufbau, wie in Fig. 1 dargestellt, wurden verschiedene Filtereigenschaften bei erfindungsgemäßen (d.h. mit anströmseitig angeordnetem Adsorptionsfilter; im nachfolgenden Text in Übereinstimmung mit dem Vorteil gemäß dem Stand der Technik als "falsch" bezeichnet) und herkömmlicher ("richtig") Einbaurichtung experimentell ermittelt und in den Figuren 2 bis 6 einander gegenübergestellt. Die Filtertests wurden nach den Vorgaben gemäß DIN 71 460 Teil 1 (Entwurf) und Teil 2 (Entwurf) durchgeführt. Es wurden sowohl frische als auch bestaubte Filter untersucht. Der "bestaubte" Filter wurde vor Durchführung der Tests jeweils 10 Tage lang mit einem vorgegebenen Luftvolumenstrom Umgebungsluft durchströmt.

Zur Bestimmung der Staubbeladung wurden jeweils drei Messungen durchgeführt. Man erkennt in Fig. 2, dass sich die Staubbeladung bei erfindungsgemäßer, d.h. "falscher", Einbaurichtung deutlich verbessert hat.

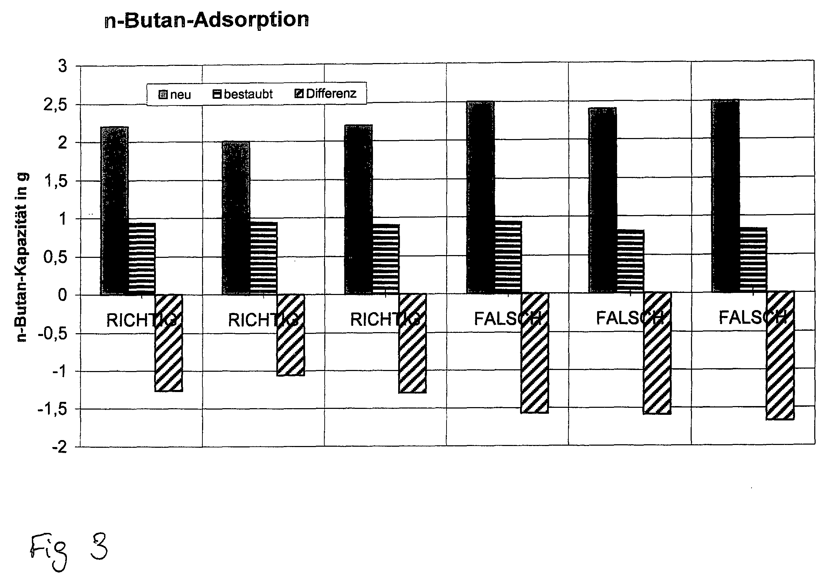

In Fig. 3 ist die n-Butan-Adsorption vor und nach der Bestaubung für beide Durchströmungsrichtungen dargestellt. Auch hier erkennt man, dass sich bei "falschem" Einbau die Filtereigenschaft gegenüber dem "richtigen" Einbau deutlich verbessert hat. Weiterhin ist zu erkennen, dass die n-Butan-Kapazität unabhängig von der Einbaurichtung mit zunehmender Bestaubung offensichtlich einem Grenzwert zustrebt.

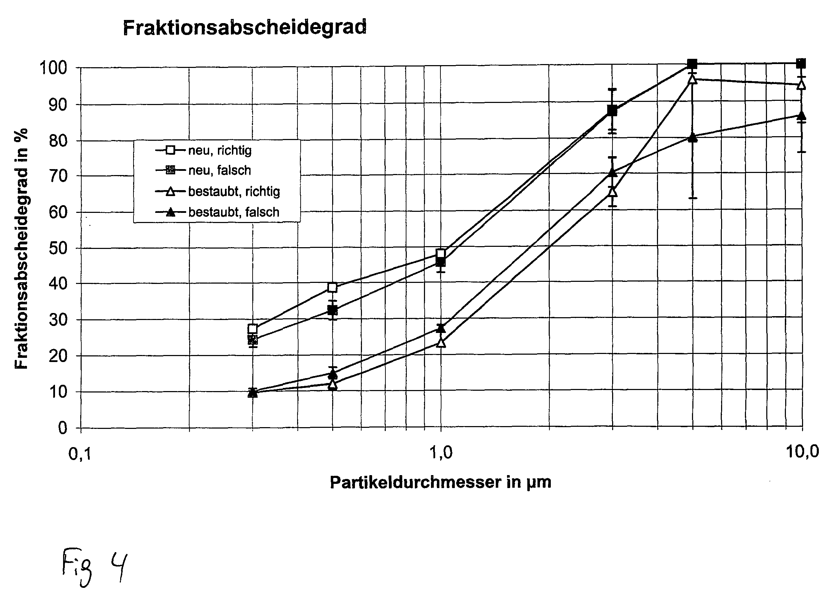

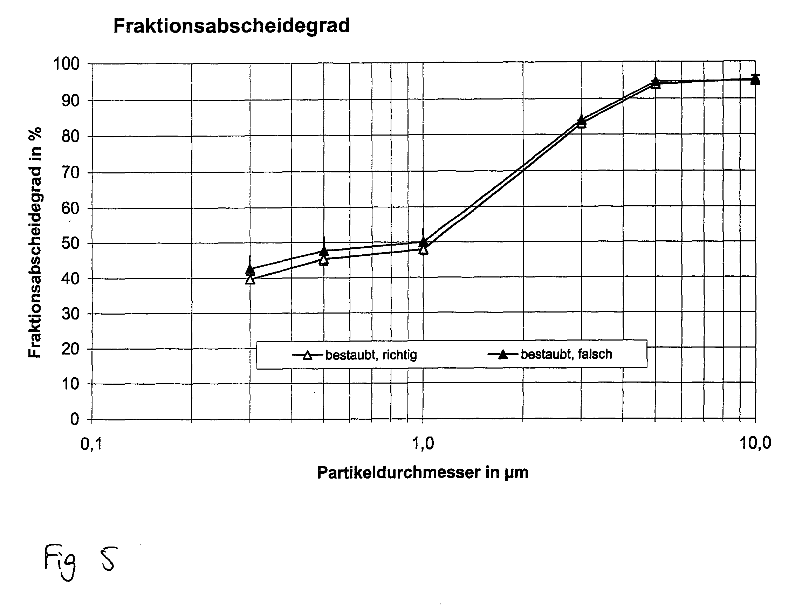

In den Figuren 4 und 5 ist die Filtereigenschaft Fraktionsabscheidegrad für Laborluft und für einen Prüfstaub SAE fein für beide Einbaurichtungen dargestellt. Aus den Figuren wird deutlich, dass der Fraktionsabscheidegrad sowohl bei einem neuen als auch bei einem bestaubten Filter unabhängig von der Einbaurichtung des Filters ist, d.h. es tritt bei der erfindungsgemäßen Anordnung des Adsorptions- und Partikelfilters keine Verschlechterung des Fraktionsabscheidegrades ein.

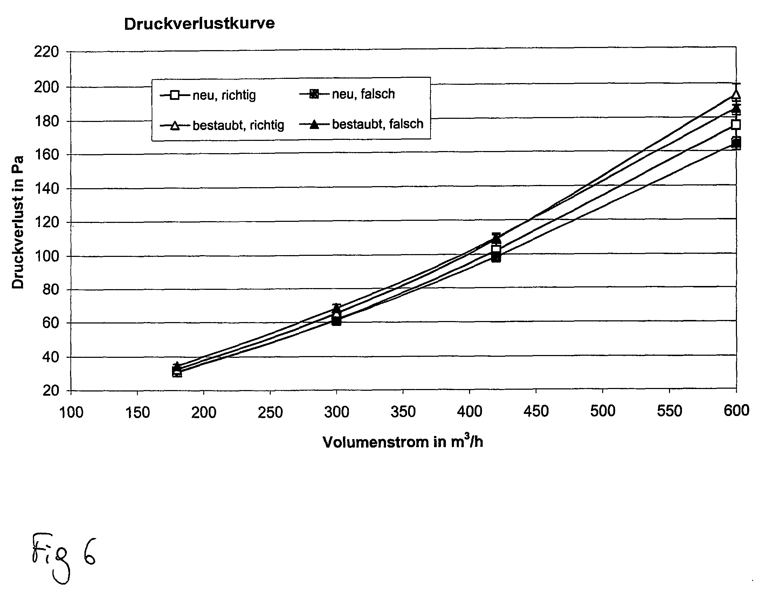

In gleicher Weise zeigt Fig. 6, dass auch der Druckverlust unabhängig von der Einbaurichtung ist, d.h. die erfindungsgemäße Filteranordnung führt ebenfalls zu keiner Verschlechterung des Druckverlustes.

## Patentansprüche

1. Filteranordnung zum Reinigen eines durchströmenden fluiden Mediums, insbesondere der einer Fahrgastzelle eines Kraftfahrzeugs zugeführten Luft, umfassend eine Partikel- und eine Adsorptionsfiltereinheit, **dadurch gekennzeichnet, dass** die Adsorptionsfiltereinheit der Partikelfiltereinheit anströmseitig vorgeschaltet ist.

2. Filteranordnung nach Anspruch 1, **dadurch gekennzeichnet, dass** die Partikelfiltereinheit wenigstens einen Partikelfilter aus Vliesstoff umfasst.

3. Filteranordnung nach Anspruch 1 oder 2, **dadurch gekennzeichnet, dass** die Adsorptionsfiltereinheit wenigstens einen Aktivkohlefilter umfasst.

4. Filteranordnung nach Anspruch 3, **dadurch gekennzeichnet, dass** der Aktivkohlefilter einen Träger aus Vliesstoff, an bzw. in welchem Aktivkohlepartikel fixiert sind, umfasst.

5. Filteranordnung nach einem der Ansprüche 1 bis 4, **dadurch gekennzeichnet, dass** die Partikel- und die Adsorptionsfiltereinheit als Kombifilter (1 ) ausgebildet sind.

6. Filteranordnung nach einem der Ansprüche 1 bis 5, **dadurch gekennzeichnet, dass** die Partikel- und/oder die Adsortionsfiltereinheit einen plattenförmigen Filtereinsatz mit zick-zack-förmig gefalteter Filterbahn umfasst.
